# EUROPÄISCHE PATENTSCHRIFT

(11) **EP 2 250 051 B1**
(45) Veröffentlichungstag und Bekanntmachung des Hinweises auf die Patenterteilung: **05.09.2018**
(21) Anmeldenummer: 09713836.6
(22) Anmeldetag: 23.01.2009
(51) Int. Cl.: B60R 21/017

(54) **STEUERGERÄT UND VERFAHREN ZUR ANSTEUERUNG VON PERSONENSCHUTZMITTELN**
CONTROL UNIT AND METHOD FOR ACTIVATING PERSONAL PROTECTION MEANS
APPAREIL DE COMMANDE ET PROCÉDÉ POUR ACTIVER DES MOYENS DE PROTECTION DE PERSONNES

(30) Priorität: 28.02.2008 DE 102008011681
(43) Veröffentlichungstag der Anmeldung: 17.11.2010
(73) Patentinhaber: Robert Bosch GmbH, 70442 Stuttgart (DE)
(72) Erfinder: SCHUMACHER, Hartmut, 71691 Freiberg (DE)
(86) Internationale Anmeldenummer: PCT/EP2009/050749
(87) Internationale Veröffentlichungsnummer: WO 2009/106392

(56) Entgegenhaltungen:
- EP-A- 1 049 229
- WO-A-2006/058800
- DE-A1- 19 542 085

## Beschreibung

### Stand der Technik

Die Erfindung betrifft ein Steuergerät bzw. ein Verfahren zur Ansteuerung von Personenschutzmitteln nach der Gattung der unabhängigen Patentansprüche. Aus DE 10 2004 057 690 A1 ist bereits eine Ladeschaltung für ein Steuergerät zur Ansteuerung von Personenschutzmitteln bekannt. Diese Ladeschaltung, dient zur Aufladung einer elektrischen Energiespeichereinrichtung, die als Kondensator ausgebildet ist.

Die WO 2006/058800 A betrifft eine Vorrichtung zum Laden einer elektrischen Energiespeichereinrichtung, welche eine aktive Strombegrenzungseinrichtung an einem Hauptstrompfad aufweist, um einen Versorgungsstrom auf einen vorbestimmen Maximalstrom zu begrenzen. Eine Spannungswandlereinrichtung ist der Strombegrenzungseinrichtung zum Anheben des Potentials der elektrischen Energiespeichereinrichtung über ein Versorgungspotential nachgeschaltet angeordnet.

Die EP 1 049 229 A offenbart einen DC-CD-Wandler, der als Batterieladeeinheit verwendet werden kann sowie ein Verfahren zum Laden einer Batterie.

Die DE 195 42 085 A1 beschreibt ein insbesondere als Sicherheitseinrichtung für Fahrzeuginsassen vorgesehenes elektronisches Gerät, das zwei Spannungswandler aufweist, die von einem Mikrocontroller nach Maßgabe der Spannung einer Fahrzeugbatterie angesteuert werden. Vermittels des Spannungswandlers wird ein als Reserveenergiequelle vorgesehener Kondensator auf einen höheren Spannungswert aufgeladen. Bei Abriss der Fahrzeugbatterie setzt der Spannungswandler die Spannung des Kondensators auf einen niedrigeren Wert herab.

### Offenbarung der Erfindung

Das erfindungsgemäße Steuergerät bzw. das erfindungsgemäße Verfahren zur Ansteuerung von Personenschutzmitteln nach der Gattung der unabhängigen Patentansprüche haben demgegenüber den Vorteil, dass die Ladegeschwindigkeit, also wie schnell die Energiespeichereinrichtung, mit dem die Energiereserve aufgeladen wird, durch ein innerhalb der Ladeschaltung erzeugtes Signal gesteuert wird. Dabei ist neben der Steuerung auch eine Regelung möglich. Damit können Anforderungen bezüglich der Ladegeschwindigkeit erfüllt werden. Insbesondere ist es möglich, dass kleinere Personenschutzsysteme, die nur mit einem Teil der maximalen Performance der Ladeschaltung auskommen, auch nur einen Teil dieser Performance ausnutzen und dadurch einen geringeren Eingangsstrom des Steuergeräts in der Ladephase der Energiereserve aufweisen. Dadurch können externe Bauelemente mit kleinerer Belastbarkeit ausgewählt werden, was zu einer Kostenreduktion beiträgt.

Vorliegend ist als Steuergerät ein elektrisches Gerät zu verstehen, das in Abhängigkeit von Sensorsignalen die Personenschutzmittel wie Airbag, Gurtstraffer, aber auch aktive Personenschutzmittel, wie eine Bremse oder eine Fahrdynamikregelung ansteuert. Ansteuern ist dabei Aktivieren dieser Personenschutzmittel.

Die Ladeschaltung ist vorzugsweise als integrierter Baustein ausgebildet, der in einer Wohngemeinschaft mit anderen Funktionen des Steuergeräts, wie beispielsweise Schnittstellen oder der Zündschaltung oder einem parallelen Auswertepfad zu einem Mikrocontroller, ausgebildet ist Es ist möglich, die Ladeschaltung diskret oder aus einer Mehrzahl von integrierten Schaltkreisen auszubilden.

Die Energiereserve ist üblicherweise ein oder mehrere Kondensatoren, die auf einer Spannung zwischen 20 V und 40V aufgeladen werden. Es ist alternativ möglich, diese Energiereserve auch magnetisch auszubilden.

Das Signal ist vorzugsweise eine Spannung, die beispielsweise durch einen an die Ladeschaltung angeschlossenen Widerstand erzeugt wird. Wie aus den abhängigen Ansprüchen hervorgeht, können jedoch auch andere Mittel vorgesehen sein, dieses Signal zu erzeugen, beispielsweise über einen Softwarebefehl oder ein Ausgangssignal eines anderen Bausteins wie beispielsweise eines Mikrocontrollers. Damit können Kostenvorteile hinsichtlich der Herstellung der Ladeschaltung beispielsweise als integrierter Schaltkreis erreicht werden.

Die Ladegeschwindigkeit definiert sich als die Zeit, die benötigt wird, die Energiereserve auf eine vorgegebene Spannung aufzuladen.

Durch die in den abhängigen Ansprüchen aufgeführten Maßnahmen und Weiterbildungen sind vorteilhafte Verbesserungen des in den unabhängigen Patentansprüchen angegebenen Steuergeräts bzw. Verfahrens zur Ansteuerung von Personenschutzmitteln möglich.

Es ist vorteilhaft, dass das Signal anhand eines an die Ladeschaltung angeschlossenen Widerstands erzeugt wird, in dem ein Referenzstrom durch diesen ersten Widerstand geführt wird. Der Referenzstrom wird in Abhängigkeit von einem zweiten an die Ladeschaltung angeschlossenen Widerstand und von einer in der Ladeschaltung erzeugten Referenzspannung erzeugt. Diese Referenzspannung wiederum wird beispielsweise in Abhängigkeit von der angeschlossenen Batteriespannung durch eine sogenannte Bandgap-Schaltung erzeugt. Diese Bandgap-Schaltung erzeugt diese Referenzspannung dann in Abhängigkeit von der Bandlücke. Eine solche Referenzschaltung wird in integrierten Schaltkreisen häufig verwendet, wobei die Spannungsdifferenz zwischen zwei Dioden verwendet wird. Mittels dieser Spannungsdifferenz wird ein Strom erzeugt, der eine Spannung an einem Widerstand hervorruft. Diese Spannung wird zu einer der Spannung der Dioden oder einer dritten Diode, die manchmal verwendet wird, hinzuaddiert. Durch die geeignete Wahl von einigen Parametern kann die Temperaturabhängigkeit eliminiert werden. Die Spannung, die erhalten wird, liegt typischerweise zwischen 1,2 V und 1,3V. Da dieser Referenzstrom der anhand der Referenzspannung erzeugt wurde, durch diesen ersten angeschlossenen Widerstand an die Ladeschaltung fließt, wird dadurch eine Spannung erzeugt, die die Ladegeschwindigkeit der Ladeschaltung bestimmt.

Die Ladeschaltung erzeugt in Abhängigkeit von einem innerhalb der Ladeschaltung erzeugten n gestuften Signal die Ladegeschwindigkeit, wobei dann n Stufen der Ladegeschwindigkeit möglich sind. Die Einstellung der Stufen kann über eine Steuerschaltung, vorzugsweise einen Prozessor des Steuergeräts über einen SPI-Befehl oder externe Codierwiderstände erfolgen.

Die Ladeschaltung weist vorzugsweise einen Precharger auf, der die Energiereserve auf die Fahrzeugbatteriespannung auflädt. Weiterhin ist wenigstens ein Schaltwandler vorgesehen, der die Energiereserve auf eine Energiereservespannung (=VERN) auflädt, wobei diese Energiereserve Spannung höher als die Fahrzeugbatteriespannung ist. Üblicherweise wird zuerst der Precharger als Stromquelle verwendet, um die Energiereserve strombegrenzt auf die Fahrzeugbatteriespannung der Fahrzeugbatteriespannung aufzuladen. In dieser Phase ist der Schaltwandler üblicherweise gesperrt. Später wird der Schaltwandler aktiviert, um die nunmehr auf die Fahrzeugbatteriespannung aufgeladene Energiereserve auf die Energiereservespannung aufzuladen. In dieser Phase wird der Precharger üblicherweise in einen Sättigungsbetrieb (Schalterbetrieb mit kleinem ON-Widerstand) gebracht zur Reduzierung der Verluste mit überlagertem Kurzschluss-Schutz (Zerstörschutz im Fehlerfalle). Der Precharger und der Schaltwandler werden erfindungsgemäß jeweils in Abhängigkeit von dem Signal einen Stromregler zur Einstellung des jeweiligen Ladestroms beeinflussen. Der Precharger und der Schaltwandler bilden einen sogenannten DC-DC-Schaltwandler für große Energiereserven mit angeschlossenen Verbrauchern. Die Aufgabe dieses Wandlers ist es, die Energiereserve aufzuladen. Vorzugsweise kann die Energiereserve nach der Aufladung auch dazu verwendet werden, die Komponenten des Steuergeräts mit elektrischer Energie zu versorgen. Der Precharger und der Schaltwandler müssen dann entsprechend einen Strom von der Fahrzeugbatterie zur Energiereserve aufrechterhalten, um die Energiereserve auf ihrer Energiereservespannung (=VERN) zu halten.

Es ist weiterhin vorteilhaft, dass das Steuergerät einen Spannungsbeobachter aufweist, der in Abhängigkeit von einer an der Energiereserve gemessenen Spannung, deren zeitlicher Veränderung oder ergänzend der Batteriespannung (verpolgeschützte Batteriespannung = V2P) den Precharger und den Schaltwandler steuert, bzw. nach Ladung der Energiereserve auf den Nennwert der Energiereservespannung das Tastverhältnis des Schaltwandlers so regelt, dass bei einer gegebenen Eingangsspannung (verpolgeschützte Batteriespannung = VZP) und einer gegebenen Last (Verbraucher) an der Energiereserve die Spannung auf dem Nennwert der Energiereservespannung gehalten wird.

Wird der Ladebetrieb erkannt (Spannung der Energiereserve (VER) < Batteriespannung (VZP)), dann ist der Scbaltwandler gesperrt und der Precharger lädt mit einem Konstantstrom die Energiereserve näherungsweise auf das Batteriespannungsniveau. Wird der Schaltwandlerbetrieb erkannt und ist die Spannung an der Energiereserve noch unterhalb des Nominalwertes (VER > VZP und VER < VERN), so wird der Precharger als Schalter in den ON Zustand (Sättigungsbetrieb) mit Kurzschluß -Strombegrenzung (Schutz) für den Fehlerfall gesetzt und der Schaltwandler aktiviert, mit einem fest vorgegebenen Tastverhältnis innerhalb einer festen Frequenz. Zusätzlich ist eine Stromüberwachung im Schaltwandler aktiv, welche den "ON" Zustand abweichend vom festen Tastverhältnis frühzeitig beenden kann, falls der Grenzwert der Stromüberwachung erreicht ist.

Wird Schaltwandlerbetrieb erkannt und ist die Spannung an der Energiereserve auf dem Nominalwert der Energiereservespannung bzw. in deren näheren Bereich (VER > VZP und VER ≈ VERN), so wird der Precharger als Schalter in den ON Zustand (Sättigungsbetrieb) mit Kurzschluß -Strombegrenzung (Schutz) für den Fehlerfall gesetzt und der Schaltwandler aktiviert mit einem durch einen Regler frei bestimmbaren Tastverhältnis innerhalb einer festen Frequenz, Zusätzlich ist eine Stromüberwachung im Schaltwandler aktiv, welche den "ON" Zustand abweichend vom geregelten Tastverhältnis frühzeitig beenden kann, falls der Grenzwert der Stromüberwachung erreicht ist

Dieser Spannungsbeobachter kann Teil der Ladeschaltung sein, er kann aber auch außerhalb der Ladeschaltung, jedoch innerhalb des Steuergeräts angeordnet sein. Der Spannungsbeobachter nimmt die Spannungswert an der Energiereserve und der Batterie (VZP) als Vielfaches einer Referenzspannung (Bandgap) auf, führt einen Vergleich durch und/oder bewertet die zeitliche Veränderung der Spannung an der Energiereserve. Ebenso führt er einen Vergleich mit abgespeicherten Nennwerten der Energiereservespannung (VERN) durch.

Die Ladeschaltung ist vorzugsweise als ein integrierter Schaltkreis ausgebildet, wobei wie oben angedeutet noch weiter Funktionen auf diesen integrierten Schaltkreis enthalten sein können, um diesen integrierten Schaltkreis als System ASIC vorzusehen. Diese hohe Integration ermöglicht die kostengünstige Herstellung von solchen Komponenten.

Das Signal kann vorteilhafter Weise durch ein außerhalb der Ladeschaltung im Steuergerät angeordnete Steuerschaltung bereitgestellt werden, wobei diese Steuerschaltung das Signal beispielsweise über einen Analogausgang oder als Softwarebefehl erzeugen kann.

Es ist weiterhin vorteilhaft, dass das Steuergerät einen Vergleicher aufweist, der vorzugsweise Teil der Ladeschaltung sein kann, der die an der Energiereserve gemessene Spannung beispielsweise durch den Spannungsbeobachter mit einer Sollspannung vergleicht und dass eine Beeinflussungsschaltung für das Signal in Abhängigkeit von dem Vergleich vorgesehen ist. Auch diese Beeinfiussungsschaltung ist vorzugsweise Teil der Ladeschaltung. Diese Sollspannung oder Sollspannungen zu verschiedenen Zeitpunkten nach Beginn der Ladung der Energiereserve sind im Steuergerät abgespeichert, beispielsweise auch im integrierten Schaltkreis der Ladeschaltung. Dafür können solche Halbleiterspeicher wie ein ROM, EEPROM oder EPROM verwendet werden. Auch andere Speichermedien sind hierfür möglich, Auch mehrere solche Spannungs-/Zeittabellen oder Spannungstabellen (zeitliche Äquidistanz vorausgesetzt) können abgespeichert sein (vorzugsweise ROM) und nur noch durch Codierwiderstände an der Ladeschaltung ausgewählt werden. Vorzugsweise weist ein ROM-Speicher der Ladeschaltung eines Steuergeräts eine oder mehrere zur Auswahl vorgesehenen Tabellen von solchen Sollspannungen auf, die auch als Kennlinie verstanden werden können. Ausführungsbeispiele der Erfindung sind in der Zeichnung dargestellt und werden in der nachfolgenden Beschreibung näher erläutert.

Es zeigen Figur 1 ein Ausführungsbeispiel der Ladeschaltung mit angeschlossenen Komponenten, Figur 2 ein erfindungsgemäßes Steuergerät, Figur 3 ein Strom-Zeit-Diagramm, Figur 4 eine vereinfachte Ladeschaltung, Figur 5 eine Signalverknüpfung, Figur 6 ein Blockschaltbild und Figur 7 ein Flussdiagramm.

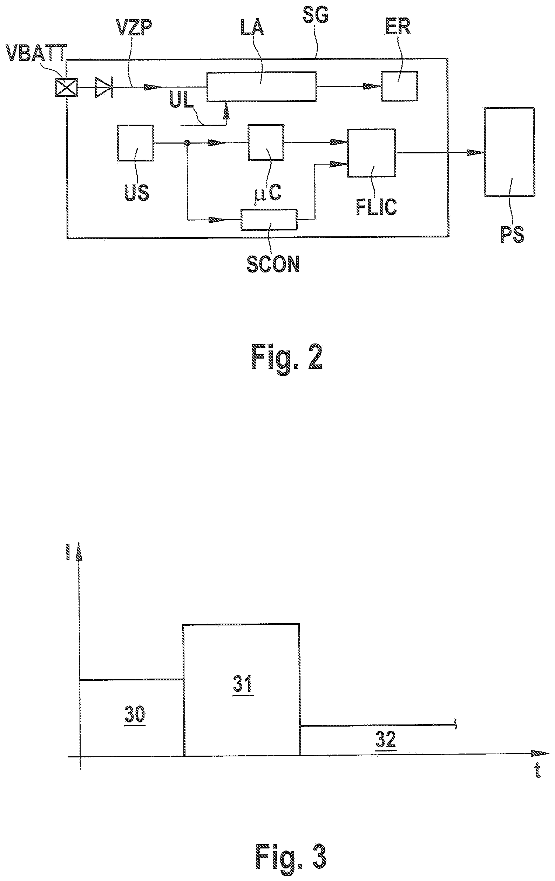

Figur 2 zeigt in einem Blockschaltbild das erfindungsgemäße Steuergerät SG, wobei nur die für das Verständnis der Erfindung notwendigen Komponenten dargestellt sind. Das Steuergerät SG steuert Personenschutzmittel PS, wie Airbags oder Gurtstraffer in Abhängigkeit von den Signalen einer Unfallsensorik IJS an, die von einem Microcontroller µC als eine Auswerteschaltung ausgewertet werden, wobei der Microcontroller µC in Abhängigkeit von einer Auslöseentscheidung eine Ansteuerungsschaltung FLIC ansteuert, so dass die Personenschutzmittel durch diese Ansteuerungsschaltung FLIC aktiviert werden. Entsprechend den Sicherheitsanforderungen für Steuergeräte zur Ansteuerung von Personenschutzmitteln erfolgt eine Freigabe der FLICs zur Aktivierung der Personenschutzmittel PS nur, wenn ein zweiter Mikrocontroler oder ein sogenannter Safety Controller = SCON die Ansteuerungsentscheidung bestätigt oder zur gleichen Entscheidung gelangt. Die Ansteuerungsschaltung FLIC verwendet die Zündenergie für die Personenschutzmittel PS aus der Energiereserve ER, üblicherweise ein oder mehrere Kondensatoren oder aus der Batterie. Die Energiereserve ER wird über eine Ladeschaltung LA auf einen vorgegebenen Wert aufgeladen, meistens liegt dieser Wert zwischen 20 und 40V. Die Ladeschaltung LA nutzt zur Aufladung die verpolgeschützte Batteriespannung/Fahrzeugspannung VZP, üblicherweise 6V-16,5V, wobei die Ladegeschwindigkeit der Aufladung der Energiereserve ER durch die externe Spannung aus dem Signal UL eingestellt wird. Diese externe Spannung UL als dem Signal kann durch verschiedene Möglichkeiten erzeugt werden. Eine einfache Möglichkeit ist die Erzeugung anhand eines an die Ladeschaltung LA angeschlossenen Widerstandes, der beispielsweise durch einen Referenzstrom durchflossen wird. Andere Möglichkeiten sind die Erzeugung dieser Spannung UL beispielsweise durch den Microcontroller µC.

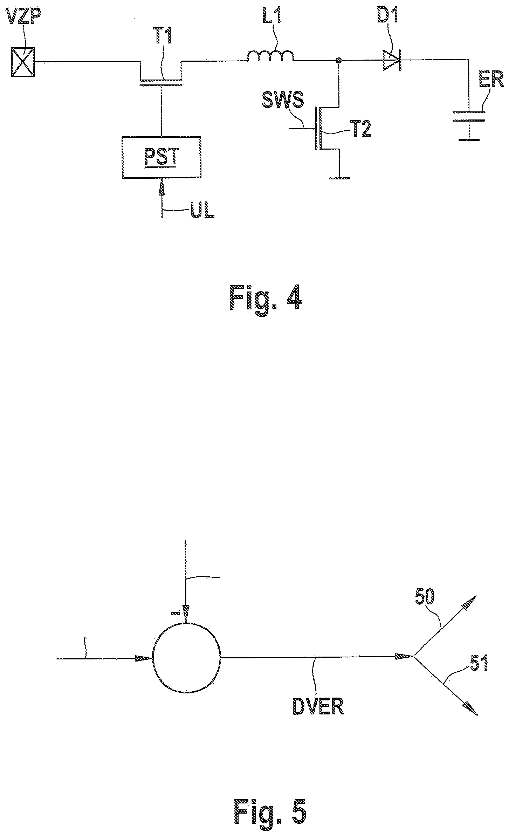

Figur 4 zeigt eine vereinfachte Darstellung der Ladeschaltung, Die verpolgeschützte Batteriespannung/Fahrzeugspannung VZP wird durch einen sogenannten Precharger, der aus einem Transistor T1 und einer Ansteuerung PST im Wesentlichen besteht, dazu verwendet, die Energiereserve ER auf die Batteriespannung aufzuladen. In dieser Ladephase durch den Precharger wird der Schaltwandler, der hier durch den Transistor T2 das Signal SWS und die Induktivität L1 symbolisiert ist, gesperrt indem der Transistor T2 keinen Strom durchlässt Dann kann der Strom von der Autobatterie/Generator VZP über den Transistor T1 die Induktivität L1, die Diode D1 zur Energiereserve ER fließen, um diese aufzuladen. Die Aufladung wird durch einen nicht dargestellten Spannungsbeobachter überwacht, der die Spannung an der Energiereserve ER misst. Die Spannung UL als extern erzeugtes Signal beeinflusst jedoch, welcher Ladestrom durch den Precharger durch den Transistor T1 fließen wird. Diese Beeinflussung kann durch eine entsprechende Ansteuerung des Gates des Transistors T1 erreicht werden, d.h. wie durchlässig ist der Transistor T1 für den Strom von der Fahrzeugbatterie/Generator zur Energiereserve ER.

Die Beeinflussung des Ladestroms durch die Größe UL ist dabei normiert auf einen Nominalwert ULN. Wird UL>ULN gewählt, steigt im Verhältnis UL/ULN der Ladestrom durch T1 in dieser Applikation zum Defaultwert (Standardwert) an oder wird UL<ULN gewählt, fällt im Verhältnis UL/ULN der Ladestrom durch T1 in dieser Applikation gegenüber dem Defaultwert (Standardwert) ab.

Wird festgestellt, dass die Energiereserve ER auf die Autobatteriespannung/Fahrzeugspannung VZP aufgeladen ist, dann geht der Precharger in einen Sättigungsbetrieb (Schalterbetrieb mit kleinem ON-Widerstand), wobei der dann fließende Precharger-Strom nur im Fehlerfalle zum Selbstschutz (Kurzschluss-Schutz) auf einen Strom begrenzt wird, der über dem in der Applikation zum Normalbetrieb geforderten Wert liegt, beispielsweise zwei Ampere.

Die Sättigungsstromgrenze (Kurzschluß - Schutz) kann ebenfalls in Abhängigkeit von den Skalierungsanforderungen der Applikation in Abhängigkeit von der Spannung UL im Verhältnis zu einer vorgegebenen Spannung ULN festgelegt werden.

In dieser Phase übernimmt der nachgeordnete Schaltwandler aufgrund der Schaltwandlerinduktivität, der Taktfrequenz, dem Tastverhältnis und der Strombegrenzung im Schaltwandlertransistor T2 die Stromkontrolle des durch den Precharger fließenden Stromes.

Der Precharger befindet sich demnach in einem Sättigungsbetrieb und der Schaltwandler geht nun in den Ladebetrieb über, wobei mit einem vorgegebenen Takt der Transistor T2 in Abhängigkeit vom Signal SWS Energie in die Induktivität L1 bringt, die dann zu einem Stromfluss von der Induktivität L1 zur Energiereserve ER führt um die Energiereserve ER auf den vorgegebenen Wert der Energiereservespannung letztlich aufzuladen.

Bei dieser Ladephase kann beispielsweise die Phase, die zur Aufladung der Induktivität L1 verwendet wird 90% des Takts beinhalten, während in 10% der Zeit der Transistor T2 wiederum gesperrt ist und so ein Abfließen des Stroms von der Induktivität L1 zur Energiereserve ER ermöglicht.

Erfindungsgemäß ist eine Strombegrenzung im Transistor T2 aktiv, die beim Erreichen einer Ladestromgrenze das Tastverhältnis 90% / 10% innerhalb einer festen Taktzeit vorzeitig beenden kann.

Die Beeinflussung dieser Ladestromgrenze des Transistors T2, bei deren Erreichen der Transistor T2 vorzeitig gegenüber der Standardzeit 90% /10% innerhalb einer festen Taktzeit abschaltet, wird durch die Größe UL normiert auf einen Nominalwert ULN bestimmt. Wird UL > ULN gewählt steigt im Verhältnis UL/ULN die Ladestromgrenze von T2 des Schaltwandlers in dieser Applikation zum Defaultwert (Standardwert) an, oder wird UL < ULN gewählt, fällt im Verhältnis UL/ULN die Ladestromgrenze in dieser Applikation gegenüber dem Defaultwert (Standardwert) ab.

Ist die Energiereserve ER nunmehr auf ihren vorbestimmten Wert VERN aufgeladen, dann geht der Schaltwandler über in einen sogenannten VER-Regelbetrieb über, um die Spannung VER zu halten. Auch in diesem Betriebsmodus ist eine Taktung vorgesehen, wobei sich nunmehr die Zeit für die der Transistor T2 geschlossen ist, in Abhängigkeit von einer vorgegebenen Zeit und dem Verhältnis der Batteriespannung zur Energiereservespannung bestimmt.

Auch in dieser dritten Phase ist die Stromüberwachung der zweiten Phase in T2 aktiv, kommt aber in Normalfall nicht zur Anwendung, da die Energiereserve geladen ist und nur noch der Strom der Verbraucher an der Energiereservespannung bereitgestellt werden muss.

Vorliegend wird das Steuergerät mit all seinen Komponenten aus der Energie der Energiereserve ER versorgt, so dass es notwendig ist, diese Energiereserve konstant aufgeladen zu halten, um im Auslösefall genügend Energie für die Ansteuerung der Personenschutzmittel bereitzuhalten.

Figur 3 zeigt die drei Phasen der Aufladung der Energiereserve ER. In einer ersten Phase 30 übernimmt der Precharger die Aufladung der Energiereserve auf die Batteriespannung. In der nachfolgenden Phase 31 erfolgt die Aufladung durch den Schaltwandler auf die Energiereservespannung. In der Phase 32 erfolgt die Regelung der Energiereserve auf die Energiereservespannung, wobei nunmehr nur der Verlust bezüglich der Energie ausgeglichen wird, der für die Versorgung des Steuergeräts SG notwendig ist.

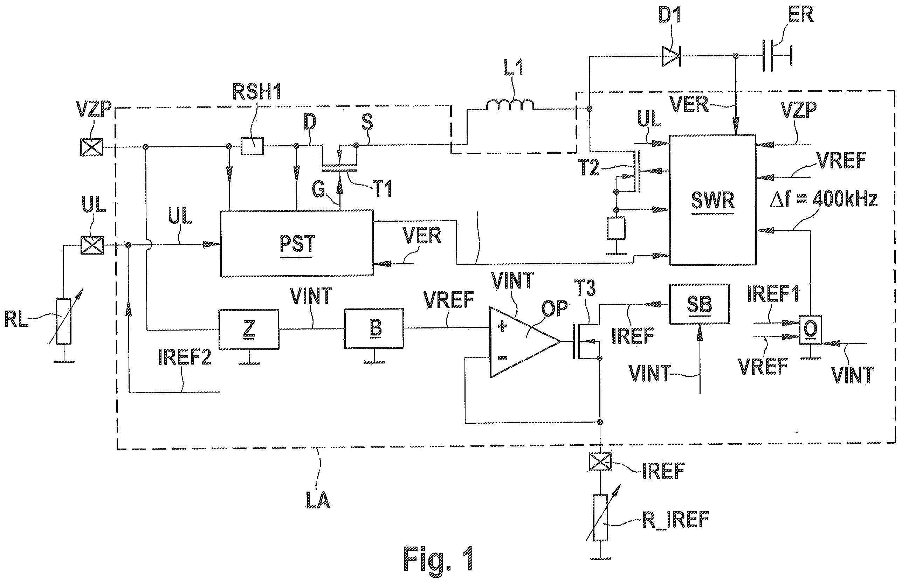

Figur 1 zeigt ein Ausführungsbeispiel der Ladeschaltung mit den angeschlossenen Komponenten. Die verpolgeschützte Batteriespannung/Fahrzeugspannung VZP wird in eine Vorstabilisierung Z beispielsweise eine Zenerdiodenschaltung der Ladeschaltung geführt, wobei diese Zenerdiode dann die Spannung VINT ausgibt, die in der Schaltung B zur Bildung der Referenzspannung VREF anhand einer Bandgap-Schaltung verwendet wird. Diese Bandgap-Spannung geht ein in den Operationsverstärker OP, der mit seinem Ausgang an einen Transistor T3 angeschlossen ist, der wiederum über seine Source mit dem negativen Eingang des Operationsverstärkers OP rückgekoppelt ist. Durch diese Schaltung wird der Referenzstrom IREF erzeugt und zwar mittels des gegen Masse geschalteten, externen Widerstands R_IREF. Dieser Strom IREF, der letztlich durch die Drain-Source-Strecke des Transistors T3 und dem Widerstand R_IREF fließt, geht in einer Strombank SB ein, aus der durch Stromspiegel Vielfache dieses Referenzstroms für weitere Aufgaben erzeugt werden können. Gespeist wird die Strombank aus VINT.

Dieser Referenzstrom wird insbesondere dazu verwendet, durch den Widerstand RL zu fließen, wobei vorliegend ein Vielfaches dieses Referenzstroms und zwar das 1,33fache verwendet wird. Die Wahl des Vielfachen erfolgt so, dass für RLN=R_REF der Defaultwert der Spannung UL=ULN in der Mitte der Analogspannungsversorgung zum Beispiel 3,3V/2-1,65V liegt. Der Referenzstrom verursacht im externen Widerstand RL die Referenzspannung UL an der Ladeschaltung LA. Diese Spannung UL liegt dann an der Steuerung/Regelung PST für den Precharger an. In Abhängigkeit von dieser Spannung UL wird der über den Shunt RSH1 erfasste aktuelle Precharger-Strom IT1 mit einem Zielwert IT1linear_N *UL/ULN verglichen und das Gate des Transistors T1 so angesteuert, dass Ziel- und Istwert übereinstimmen. Dadurch ist der Strom, der von der Fahrzeugbatterie / Generator (VZP) über den Widerstand RSH1. die Drain-Source-Strecke des Transistors T1. die Induktivität L1, die Diode D1 zur Energiereserve ER als Ladestrom fließt von der Spannung UL a priori festgelegt. Damit legt die Spannung UL diesen Strom fest, der zur Aufladung der Energiereserve ER in der Phase 1 auf Batteriespannungsniveau/Fahrzeugspannungsniveau verwendet wird und damit wird auch die Ladegeschwindigkeit bei fester Energiereservekapazität bestimmt, denn die Aufladung durch den Precharger endet, wenn die Batteriespannung/Fahrzeugspannung (VZP) an der Energiereserve ER erreicht ist. Gleichzeitig ist der Transistor T2 des Schaltwandlers gesperrt, so dass der Schaltwandler in dieser Ladephase bis zur Batteriespannung nichts beiträgt, Ist jedoch die Spannung VER gleich der Spannung VZP oder in einem sogenannten Fangbereich, dann versetzt die Steuerung/Regelung PST den Precharger in einen Sättigungsbetrieb, dh, der Stromregelungszielwert wird auf IT1kurzschluss_N * UL/ULN gesetzt. Dieser Wert ist so hoch gewählt, dass er im Normalfall der Applikation nicht erreicht werden kann, daher geht der Transistor in den nahezu verlustfreien "On Zustand", Rdson = 0 ...2Ohm. Auch dieser Zielwert für IT1 in der Ladephase 2 skaliert mit der Spannung UL. Ebenso gibt mit Beginn der Phase 2 die Steuerung / Regelung PST ein Enable-Signal, d.h. ein Freigabesignal für den Transistor T2 an die Steuerung / Regelung des Schaltwandlers SWR weiter.

Im Schaltwandelbetrieb der Ladephase 2 wird in Abhängigkeit von der Spannung UL der max. zulässige Strom durch T2 (und damit auch durch L1 und T1) in einer Taktphase beeinflusst und damit die Ladegeschwindigkelt der Energiereserve in diese Phase bis zum erreichen von VER=VERN beeinflusst. Um zu erkennen, wann die Aufladung beendet ist, misst die Ansteuerung des Schaltwandlers SWR die Spannung VER. Hat. VER den Zielwert VERN oder ein sogenanntes Fanggebiet des Zielwertes erreicht wird die Ladephase 3 eingeschaltet. Die Taktung wird durch einen internen Oszillator O erreicht, der die Oszillation in Abhängigkeit von der Spannung VINT, VREF und IREF1 erreicht. Die Frequenz kann beispielsweise bei 400 kHz liegen.

Der Schaltwandler SWR führt, wie oben ausgeführt, eine Taktung durch, um in einer ersten Phase des Taktes die induktivität L1 aufzuladen und in einer zweiten Phase des Taktes die Induktivität L1 zur Entladung an die Energiereserve ER freizugeben. Vorliegend wird a priori für die Aufladung 90% der verfügbaren Taktzeit und 10% für die Entladung vorgesehen.

Die tatsächliche Aufladung wird zusätzlich durch Sensierung des Stromes IT2 bestimmt. Erreicht in einer Aufladephase (0 ...90%) der verfügbaren Taktzeit (T=2.5µs) der Strom IT2 den Grenzwert IT2sw_N * UL/ULN, so wird die Ladephase noch vor erreichen der 90% a priori Bedingung abgebrochen. Die Spannung UL beeinflusst daher die Ladegeschwindigkeit der Energiereserve in der Ladephase 2.

Ist die Ladephase 3 erreicht, dh. VER im Fangbereich von VERN, so hebt die Steuerung / Regelung SWR die a priori Festlegung (Zwangstaktung) des Schaltwandlers mit den Werten 90% / 10% auf und überlässt die Einstellung der Auflade- und Sperrphase des Wandlers einer PWM (Pulsweitenmodulation) - Regelung, die abhängig von der Stromlast an VER und der Höhe der Eingangsspannung ein geeignete Aufladephase / Sperrphase innerhalb jeder festen Taktzeit neu vorgibt. Die Stromüberwachung mittels des Shunts RSH2 wird weiter aufrechterhalten, kommt aber im Normalfall der Applikation nicht mehr zum Einsatz, da bei geladener Energiereserve der Strom für die an VER vorhandenen Verbraucher deutlich geringer ist. Sie dient nur noch dem Kurzschluss - Schutz an VER.

Figur 1 zeigte die vorgegebene Anpassung der Ladegeschwindigkeit an ein vorgegebene Applikation. Hohe UL Spannung bedeutete hohe Ladegeschwindigkeit, niedrige UL Spannung bedeutete niedrige Ladegeschwindigkeit. Die tatsächliche Ladegeschwindigkeit variierte nach wie vor stark (+/- 50%), da die Kapazitätstoleranzen hoch (+/-35%) und die kostengünstig erreichbaren Stromregelgenauigkeiten (+/-15%) mäßig sind.

Figur 5 zeigt daher eine Weiterbildung der Erfindung. In Figur 5 ist dargestellt, dass die vom Spannungsbeobachter an verschiedenen Zeitpunkten tn der Ladephase 1, 2 gemessene Spannung VER_Ist(tn) von der Sollspannung VER_Soll(tn) abgezogen wird. Die Differenz DVER(tn) wird dazu verwendet, die Spannung UL für den Precharger 50 und den Schaltwandler 51 an den verschiedenen Zeitpunkten zu verändern, um damit die Aufladung besser auf den gewünschten Wert einzuregeln. Dies führt zu einer verbesserten Toleranz der Ladegeschwindigkeit. Insgesamt wird damit die Genauigkeit erhöht.

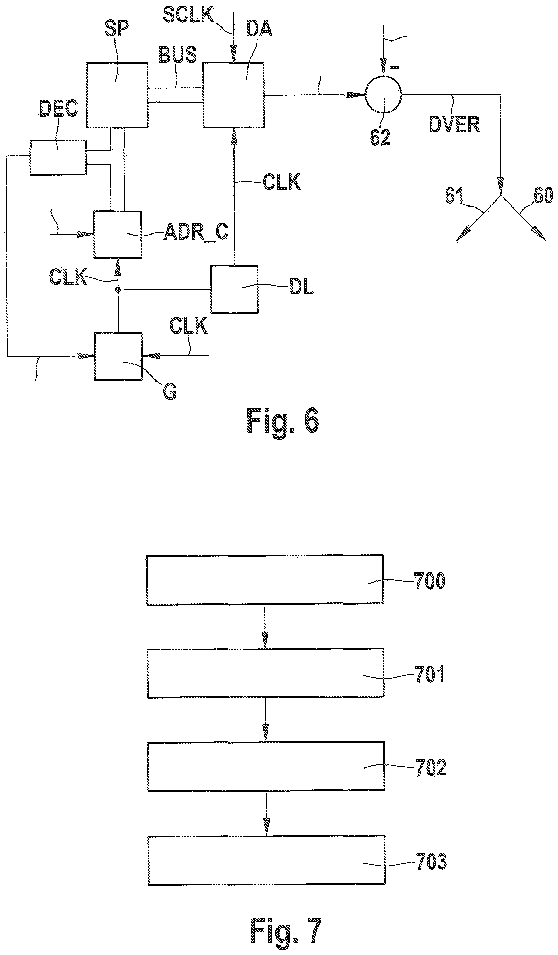

Figur 6 zeigt dies im Detail. Wiederum ist der Subtrahierer 62 dargestellt, bei dem eine Subtraktion der Soll-Spannung VER_Soll(tn) und der Ist-Spannung VER_Ist(tn) durchgeführt wird, um die Differenzspannung DVER(tn) zu verwenden, die zur Beeinflussung des Prechargers 60 und/oder des Schaltwandlers 61 verwendet wird um die Spannung UL entsprechend zu beeinflussen. Die jeweiligen Soll-Spannung werden dabei aus einem Speicher SP geladen, der beispielsweise in der Ladeschaltung oder einem anderen Ort im Steuergerät SG angeordnet sein kann, Dabei werden diese Soll-Werte über einen BUS an einen DA_Wandler geleitet, der aus der digitalen Spannung einen Analogwert wandelt, der mit dem gemessenen Wert verglichen werden kann. Eine rein digitale Auswertung ist natürlich auch möglich.

Das Auslesen der Werte ist vorliegend getaktet, beispielsweise mit einem Takt von 100ms. Dazu wird ein Adresszähler ADR_C beim Hochlauf des Steuergeräts initialisiert und führt dazu, dass im Takt beispielsweise von 100ms mit dem Signal CLK die Soll-Werte aus dem Speicher SP ausgelesen werden, wobei gleichzeitig an den Adress-Bus ein Decoder DEC angeschlossen ist, der bei der Stopp-Adresse dazu führt, dass ein Gate G beschlossen wird, wenn diese StartAdresse erreicht wird. Im Normalfall sollte dann der Endwert erreicht sein. Das Gate G lässt den Takt zum Adresszähler ADR_C durch und auch zu einem Verzögerungsglied DL, das den Takt an den Digital-Analog-Wandler weitergibt.

In der Ladephase 1, 2 lässt das Gate G den Takt zum Adresszähler ADR_C durch und auch zu einem Verzögerungsglied DL, das verzögert den Takt an den Digital-Analog-Wandler weitergibt.

Durch Vorgabe einer neuen Adresse wird ein neuer Datenwert VER_soll(tn)_digital auf den BUS zum DA - Wandler gelegt und wenn dieser stabil ist verzögert durch den DA-Wandler in einen Analogwert VER_soll(tn) gewandelt Die Wandlung im DA-Wandler geschieht mit einem schnellen Systemclock (Takt).

Figur 7 zeigt ein Flussdiagramm des erfindungsgemäßen Verfahrens. Im Verfahrensschritt 700 wird das Signal als externe Spannung UL erzeugt, beispielsweise wie oben dargestellt über den an die Ladeschaltung angeschlossenen externen Widerstand RL der variabel sein kann. Mit dieser Spannung UL wird der Precharger bezüglich seiner Ladegeschwindigkeit im Verfahrensschritt 701 beeinflusst. Nach dem Aufladen der Energiereserve auf die Batteriespannung wird im Verfahrensschritt 702 auch der Schaltwandler in Abhängigkeit von der Spannung UL bezüglich der Ladegeschwindigkeit in der oben beschriebenen Weise beeinflusst. Hat die Energiereserve seine Energiereservespannung, also die Endspannung erreicht, erfolgt im Verfahrensschritt 703 die Regelung auf diese Spannung.

## Patentansprüche

1. Steuergerät (SG) zur Ansteuerung von Personenschutzmitteln (PS) mit einer Ladeschaltung (LA) zur Aufladung einer Energiereserve (ER) für das Steuergerät (SG), wobei
- die Ladeschaltung (LA) in Abhängigkeit von einem innerhalb der Ladeschaltung (LA) erzeugten Signal (UL) eine Ladegeschwindigkeit der Aufladung einstellt,
- die Ladeschaltung (LA) in Abhängigkeit von einem innerhalb der Ladeschaltung (LA) erzeugten n gestuften Signal (ULN/a1, ..., ULN/an) die Ladegeschwindigkeit einstellt,
- die Ladenschaltung (LA) von einer Fahrzeugbatteriespannung (VZP) versorgbar ist,
- die Ladeschaltung (LA) einen Precharger aufweist, der von der Fahrzeugbatteriespannung (VZP) versorgbar ist,
- das Steuergerät (SG) einen Schaftwandler aufweist, wobei
∘ der Schaitwandler aus einer Serienschaltung aus einer Induktivität (L1) und einer Diode (D1) besteht und einen zusätzlichen Transistor (T2) aufweist,
∘ die Induktivität (L1) über den Transistor (T2) mit Masse verbindbar ist,
∘ die Diode (D1) zum Laden der Energiereserve (ER) mit der Energiereserve (ER) verbindbar ist,
- die Induktivität (L1) mit dem Precharger verbunden ist,
- der Schaltwandler ausgebildet ist, die Energiereserve (ER) auf eine Energiereservespannung (VER) zu laden, die höher ist als die Fahrzeugbatteriespannung (VZP),
**dadurch gekennzeichnet, dass**
eine Strombegrenzung im Transistor (T2) aktiv ist, wobei
die Strombegrenzung bei Erreichen einer Ladestromgrenze des mit einem Tastverhältnis von 90% / 10% über die Induktivität (L1) durch den Transistor (T2) fließenden Ladestroms innerhalb einer festen Taktzeit vorzeitig beenden kann.

2. Steuergerät (SG) nach Anspruch 1, **dadurch gekennzeichnet, dass** das n gestufte Signal (ULN/a1, ... ULN/an) anhand eines an die Ladeschaltung (LA) angeschossenen ersten Widerstands (RL) erzeugt wird, in dem ein Referenzstrom (IREF) durch den ersten Widerstand (RL) geführt wird, wobei der Referenzstrom (IREF) in Abhängigkeit von einem zweiten an die Ladeschaltung (LA) angeschlossenen Widerstand (R_REF) und von einer in der Ladeschaltung (LA) erzeugten Referenzspannung (VREF) erzeugt wird.

3. Steuergerät (SG) nach Anspruch 1, **dadurch gekennzeichnet, dass** eine Steuerschaltung (µC) vorgesehen ist, der die Stufen über wenigstens einen SPI-Befehl oder über wenigstens einen externen Codierwiderstand einstellt.

4. Steuergerät (SG) nach einem der vorhergehenden Ansprüche, **dadurch gekennzeichnet, dass** der Precharger die Energiereserve (ER) auf eine Fahrzeugbatteriespannung (VZP) auflädt und dass der Precharger und der Schaltwandler jeweils in Abhängigkeit von dem n gestuften Signal (ULN/a1, ..., ULN/an) einen Stromregler zur Einstellung eines jeweiligen Ladestroms aufweisen.

5. Steuergerät (SG) nach Anspruch 1, **dadurch gekennzeichnet, dass** das Steuergerät (SG) einen Spannungsbeobachter aufweist, der in Abhängigkeit von einer an der Energiereserve (ER) gemessenen Spannung den Precharger in einen stromgeregelten oder begrenzten Ladebetrieb schaltet und den Schaltwandler sperrt oder den Precharger in einen Sättigungsbetrieb mit niedrigem Durchgangswiderstand (Rdson) schaltet und den Schaltwandler jeweiis in einen Ladebetrieb oder einen Sättigungsbetrieb schaltet, durch eine Stromregelung oder eine Begrenzung auf einen Wert über der Strombegrenzung des gleichzeitig freigegebenen Schaltwandlers liegt.

6. Steuergerät (SG) nach einem der vorhergehenden Ansprüche, **dadurch gekennzeichnet, dass** die Ladeschaltung (LA) als wenigstens ein integrierter Schaltkreis ausgebildet ist.

7. Steuergerät (SG) nach Anspruch 1, **dadurch gekennzeichnet, dass** das Steuergerät (SG) einen Vergleicher (62) aufweist, der die an der Energiereserve gemessenen Spannung mit einer Sollspannung vergleicht und dass eine Beeinflussungsschaltung für das n gestufte Signal Signal (ULN/al, ..., ULN/an) in Abhängigkeit von dem Vergleich vorgesehen ist.

8. Steuergerät (SG) nach Anspruch 7, **dadurch gekennzeichnet, dass** ein Speicher (SP) im Steuergerät (SG) vorgesehen ist, der eine Tabelle von Sollspannungen aufweist.

9. Steuergerät (SG) nach Anspruch 8, **dadurch gekennzeichnet, dass** die im Speicher (SP) vorgesehenen Sollwerte für die Spannung der Energiereserve in einer vorher festgelegten zeitlichen Abfolge abgearbeitet werden und dadurch die Beeinflussung des n gestuften Signals (ULN/al, ..., ULN/an) in dieser zeitlichen Abfrage möglich ist.

10. Verfahren zur Ansteuerung von Personenschutzmitteln (PS), wobei mit einer Ladeschaltung (LA) eines Steuergerätes (SG) gemäß einem der vorhergehenden Ansprüche eine Energiereserve (ER) für das Steuergerät (SG) aufgeladen wird, **dadurch gekennzeichnet, dass** die Ladeschaltung (LA) in Abhängigkeit von einem innerhalb der Ladeschaltung (LA) erzeugten n gestuften Signal (ULN/a1, ..., ULN/an) eine Ladegeschwindigkeit der Aufladung einstellt.

11. Verfahren nach Anspruch 10, **dadurch gekennzeichnet, dass** eine an der Energiereserve (ER) gemessene Spannung mit einer Sollspannung verglichen wird und dass in Abhängigkeit von dem Vergleich das n gestufte Signal (ULN/a1, ..., ULN/an) beeinflusst wird.

## Claims

1. Control device (SG) for actuating personal protection means (PS) comprising a charging circuit (LA) for charging an energy reserve (ER) for the control device (SG), wherein
- the charging circuit (LA) sets a charging speed of the charging depending on a signal (UL) generated within the charging circuit (LA),
- the charging circuit (LA) sets the charging speed depending on an n-stepped signal (ULN/al, ..., ULN/an) generated within the charging circuit (LA),
- the charging circuit (LA) can be supplied with power by a vehicle battery voltage (VZP),
- the charging circuit (LA) has a precharger, which can be supplied with power by the vehicle battery voltage (VZP),
- the control device (SG) has a switching converter, wherein
- the switching converter consists of a series circuit composed of an inductance (L1) and a diode (D1) and has an additional transistor (T2),
- the inductance (L1) can be connected to earth by means of the transistor (T2),
- the diode (D1) can be connected to the energy reserve (ER) for charging the energy reserve (ER),
- the inductance (L1) is connected to the precharger,
- the switching converter is designed to charge the energy reserve (ER) to an energy reserve voltage (VER), which is higher than the vehicle battery voltage (VZP),
**characterized in that**
current limiting in the transistor (T2) is active, wherein
the current limiting can end prematurely when a charging current limit of the charging current with a duty cycle of 90%/10% flowing through the transistor (T2) via the inductance (L1) is reached within a fixed clock time.

2. Control device (SG) according to Claim 1, **characterized in that** the n-stepped signal (ULN/al, ... ULN/an) is generated on the basis of a first resistor (RL) connected to the charging circuit (LA), in which first resistor a reference current (IREF) is guided through the first resistor (RL), wherein the reference current (IREF) is generated depending on a second resistor (R_REF) connected to the charging circuit (LA) and on a reference voltage (VREF) generated in the charging circuit (LA).

3. Control device (SG) according to Claim 1, **characterized in that** a control circuit (µC) is provided, which control circuit sets the steps by means of at least one SPI command or by means of at least one external coding resistor.

4. Control device (SG) according to one of the preceding claims, **characterized in that** the precharger charges the energy reserve (ER) to a vehicle battery voltage (VZP) and **in that** the precharger and the switching converter each have, depending on the n-stepped signal (ULN/al, ..., ULN/an), a current controller for setting a respective charging current.

5. Control device (SG) according to Claim 1, **characterized in that** the control device (SG) has a voltage monitor, which, depending on a voltage measured at the energy reserve (ER), switches the precharger to a current-controlled or limited charging operation and blocks the switching converter or switches the precharger to a saturation operation with a low contact resistance (Rdson) and switches the switching converter respectively to a charging operation or a saturation operation, lies by way of current control or limiting to a value by means of the current limiting of the simultaneously released switching converter.

6. Control device (SG) according to one of the preceding claims, **characterized in that** the charging circuit (LA) is designed as at least an integrated circuit.

7. Control device (SG) according to Claim 1, **characterized in that** the control device (SG) has a comparator (62), which compares the voltage measured at the energy reserve with a target voltage and **in that** an influencing circuit is provided for the n-stepped signal signal (ULN/al, ..., ULN/an) depending on the comparison.

8. Control device (SG) according to Claim 7, **characterized in that** a storage means (SP) is provided in the control device (SG), which storage means has a table of target voltages.

9. Control device (SG) according to Claim 8, **characterized in that** the target values for the voltage of the energy reserve that are provided in the storage means (SP) are processed in a previously determined temporal sequence and as a result the influencing of the n-stepped signal (ULN/al, ..., ULN/an) in this temporal request is possible.

10. Method for actuating personal protection means (PS), wherein an energy reserve (ER) for the control device (SG) is charged using a charging circuit (LA) of a control device (SG) according to one of the preceding claims, **characterized in that** the charging device (LA) sets a charging speed of the charging depending on an n-stepped signal (ULN/al, ..., ULN/an) generated within the charging circuit (LA).

11. Method according to Claim 10, **characterized in that** a voltage measured at the energy reserve (ER) is compared with a target voltage and **in that** the n-stepped signal (ULN/al, ..., ULN/an) is influenced depending on the comparison.

## Revendications

1. Appareil de commande (SG) servant à activer des moyens de protection de personnes (PS), comportant un circuit de charge (LA) servant à charger une réserve d'énergie (ER) pour l'appareil de commande (SG), dans lequel
- le circuit de charge (LA) règle une vitesse de charge de l'opération de charge en fonction d'un signal (UL) généré dans le circuit de charge (LA),
- le circuit de charge (LA) règle la vitesse de charge en fonction d'un signal à n niveaux (ULN/al, ..., ULN/an) généré dans le circuit de charge (LA),
- le circuit de charge (LA) peut être alimenté par une tension de batterie de véhicule (VZP),
- le circuit de charge (LA) comporte un préchargeur qui peut être alimenté par la tension de batterie de véhicule (VZP),
- l'appareil de commande (SG) comporte un convertisseur de commutation, dans lequel
o le convertisseur de commutation se compose d'une connexion en série constituée d'une inductance (L1) et d'une diode (D1) et comporte un transistor supplémentaire (T2),
o l'inductance (L1) peut être reliée à la terre par l'intermédiaire du transistor (T2),
o la diode (D1) servant à charger la réserve d'énergie (ER) peut être connectée à la réserve d'énergie (ER),
- l'inductance (L1) est connectée au préchargeur,
- le convertisseur de commutation est conçu pour charger la réserve d'énergie (ER) à une tension de réserve d'énergie (VER) qui est supérieure à la tension de batterie de véhicule (VZP),
**caractérisé en ce qu'**une limitation de courant est active dans le transistor (T2), dans lequel
la limitation de courant peut se terminer prématurément au cours d'un temps de cycle fixe lorsqu'une limite de courant de charge du courant de charge circulant avec un rapport cyclique de 90%/10% à travers le transistor (T2) par l'intermédiaire de l'inductance (L1) est atteinte.

2. Appareil de commande (SG) selon la revendication 1, **caractérisé en ce que** le signal à n niveaux (ULN/al, .... ULN/an) est généré au moyen d'une première résistance (RL) connectée au circuit de charge (LA), dans lequel un courant de référence (JREF) est amené à passer à travers la première résistance (RL), dans lequel le courant de référence (IREF) est généré en fonction d'une seconde résistance (R_REF) raccordée au circuit de charge (LA) et d'une tension de référence (VREF) générée dans le circuit de charge (LA).

3. Appareil de commande (SG) selon la revendication 1, **caractérisé en ce qu'**il est prévu un circuit de commande (µC) qui règle les niveaux par l'intermédiaire d'au moins une commande SPI ou par l'intermédiaire d'au moins une résistance de codage externe.

4. Appareil de commande (SG) selon l'une des revendications précédentes, **caractérisé en ce que** le préchargeur charge la réserve d'énergie (ER) à une tension de batterie de véhicule (VZP) et **en ce que** le préchargeur et le convertisseur de commutation comportent respectivement un régulateur de courant servant à régler un courant de charge respectif en fonction du signal à n niveaux (ULN/al, ..., ULN/an).

5. Appareil de commande (SG) selon la revendication 1, **caractérisé en ce que** l'appareil de commande (SG) comporte un observateur de tension qui, en fonction d'une tension mesurée au niveau de la réserve d'énergie (ER), commute le préchargeur dans un mode de charge commandé en courant ou limité et bloque le convertisseur de commutation ou commute le préchargeur dans un mode de saturation à faible résistance de contact (Rdson) et commute le convertisseur de commutation respectivement dans un mode de charge ou un mode de saturation, se situe par une régulation de courant ou une limitation à une valeur au moyen de la limitation de courant du convertisseur de commutation simultanément activé.

6. Appareil de commande (SG) selon l'une des revendications précédentes, **caractérisé en ce que** le circuit de charge (LA) est réalisé sous la forme d'au moins un circuit intégré.

7. Appareil de commande (SG) selon la revendication 1, **caractérisé en ce que** l'appareil de commande (SG) comporte un comparateur (62) qui compare la tension mesurée au niveau de la réserve d'énergie à une tension de consigne et **en ce qu'**il est prévu un circuit d'influence destiné à influencer le signal signal à n niveaux (ULN/al, ..., ULN/an) en fonction de la comparaison.

8. Appareil de commande (SG) selon la revendication 7, **caractérisé en ce qu'**il est prévu dans l'appareil de commande (SG) une mémoire (SP) qui comporte une table des tensions de consigne.

9. Appareil de commande (SG) selon la revendication 8, **caractérisé en ce que** les valeurs de consigne prévues dans la mémoire (SP) pour la tension de la réserve d'énergie sont traitées dans une séquence temporelle prédéterminée et **en ce que** le signal à n niveaux (ULN/al, ..., ULN/an) peut ainsi être influencé par cette interrogation temporelle.

10. Procédé de commande de protection de personnes (PS), dans lequel une réserve d'énergie (ER) destinée à un appareil de commande (SG) est chargée au moyen d'un circuit de charge (LA) de l'appareil de commande (SG) selon l'une des revendications précédentes, **caractérisé en ce que** le circuit de charge (LA) règle une vitesse de charge de l'opération de charge en fonction d'un signal à n niveaux (ULN/al, ..., ULN/an) généré dans le circuit de charge (LA).

11. Procédé selon la revendication 10, **caractérisé en ce qu'**une tension mesurée au niveau de la réserve d'énergie (ER) est comparée à une tension de consigne et **en ce que** le signal à n niveaux (ULN/al, ..., ULN/an) est influencé en fonction de la comparaison.
